# EUROPEAN PATENT APPLICATION

(11) **EP 1 095 751 A2**
(43) Date of publication of application: **02.05.2001**
(21) Application number: 00203819.8
(22) Date of filing: 01.11.2000
(51) Int. Cl.: B29C 43/02, B29C 43/18, F16K 27/02

(54) **Thermoforming fixture for an air flow valve within a curved air flow bore**

(30) Priority: 01.11.1999 US 162835 P
(71) Applicant: SIEMENS CANADA LIMITED, Tilbury, Ontario N0P 2LO (CA)
(72) Inventor: Xia, Zhouxuan, Windsor, Ontario N0P 1A0 (CA); Vanderveen, Jim, Windsor, Ontario N0P 1A0 (CA)
(74) Representative: Neill, Andrew Peter

(57) **Abstract**

A forming assembly includes an articulatable support insertable into a curved bore of an air flow assembly such as a throttle body system (10) having a valve disc (16) within a curved bore. The articualtable support is inserted into the bore from one side of the valve disc (16), and another support is inserted into the bore on the other side of the disc. The articulatable support (26) includes a first portion (32) movable relative to a second portion (34) such that the support fits through a bore portion that is relatively more narrow than an outer periphery of the valve disc (16). The articulatable support (26) is then expanded to be correctly position to engage the disc adjacent the disc outer periphery.

## Description

### BACKGROUND OF THE INVENTION

The present invention relates to techniques for manufacturing assemblies of molded parts, and more particularly to techniques for manufacturing a throttle valve disc within a throttle body having a non-linear bore.

Air flow valves include a flow control blade or disc which fit into a bore of a throttle body which defines an air flow passage. The disc is pivoted on a shaft to open and close the flow passage, and must fit accurately to rotate between a closed position allowing a low flow of air and open positions. With machined or stamped metal parts, a sufficiently accurate fit has been obtained by a technique of centering the disc at assembly.

However, where the valve body and the valve disc are both molded of a non-metallic material, a difficult manufacturing problem is encountered due to the close tolerances required for a proper fit. One difficulty arises when the disc is to be fitted within a throttle body having a curved bore. In a curved bore throttle body, the disc is located within a bore area defining an inner periphery greater than at least one end of the throttle body bore.

Typically, an upper and lower forming support thermally forms the outer periphery of the disc to closely fit within the throttle body bore. The forming supports enter the throttle body on each side of the disc and squeeze the disc material such that the material is extruded radially outwardly into contact with the bore. An effective engagement is thereby provided. However, if the bore is curved, conventional forming supports cannot fit within the smaller periphery bore portion and contact the outer periphery of the disc which is located in a larger periphery bore portion. This prevents the final thermal forming of the disc within the bore which may reduce the effectiveness of the fluid flow through the throttle body.

Accordingly, it is desirable to provide a manufacturing process for molding an accurately fitted valve disc within an air flow assembly having a curved bore.

### SUMMARY OF THE INVENTION

The forming assembly according to the present invention includes an articulatable support insertable into a non-linear or curved bore of an air flow assembly such as a throttle body system. The articualtable support is inserted into the bore from one side of the valve disc, and another support is inserted into the bore on the other side of the disc. Each support includes an integral heater for heating and forming of the disc and a relatively narrow semi-circular or semi-elliptical forming segment.

The articulatable support preferably includes a first portion movable relative to a second portion. The first portion is articulated relative to the second portion such that the support is positionable in a closed or collapsed position. In the closed position, the support fits through the relatively more narrow portion of the curved bore. Once the articualtable support is passed through the narrow portion the first portion is pivoted away from the second portion such that the second support is articulated to an open or expanded position. The forming segments extending from the first and second portions are thereby correctly positioned to engage the disc adjacent the disc outer periphery.

Once the supports contact the disc, the forming segments form the outer periphery of the disc. As the disc is squeezed between the supports, heat conducted from the heaters and through the forming segments cause the material of the disc to be extruded radially outwardly into contact with the enlarged inner periphery portion of the bore.

When the thermoforming operation is complete, the support is articulated back into the closed position and is removed through the relatively more narrow portion of the curved bore.

The present invention therefore provides a manufacturing process for molding an accurately fitted valve disc into an air flow assembly having a curved bore.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a general perspective view of a vehicle throttle body system having a non-linear bore;
Figure 1A is a sectional view of the non-linear bore of Figure 1;
Figure 2A is sectional view of a throttle body system located within a molding assembly having a support according to the present invention;
Figure 2B is an exploded facial view of a support illustrating the forming segments;
Figure 3A is a perspective view of a forming support in a first articulated position;
Figure 3B is a perspective view of the support of Figure 3A in the first articulated position located relative to a curved throttle bore;
Figure 3C is a perspective view of the forming support of Figure 3A in a second articulated position;
Figure 3D is a perspective view of the support of Figure 3A in the second articulated position located relative to a valve disc;
Figure 4A is a general perspective view of another embodiment of a forming support in a first articulated position;
Figure 4B is a general perspective view of the forming support of Figure 4A in a second articulated position;
Figure 4C is a general perspective view of a pair of the forming supports of Figure 4A in a closed position and inserted into a curved throttle bore having a spherical bore portion; and
Figure 4D is a perspective view of the pair of the forming supports of Figure 4C in an open position and inserted into the curved throttle bore having a spherical bore portion.

### DETAILED DESCRIPTION OF THE PREFERRED EMBODIMENT

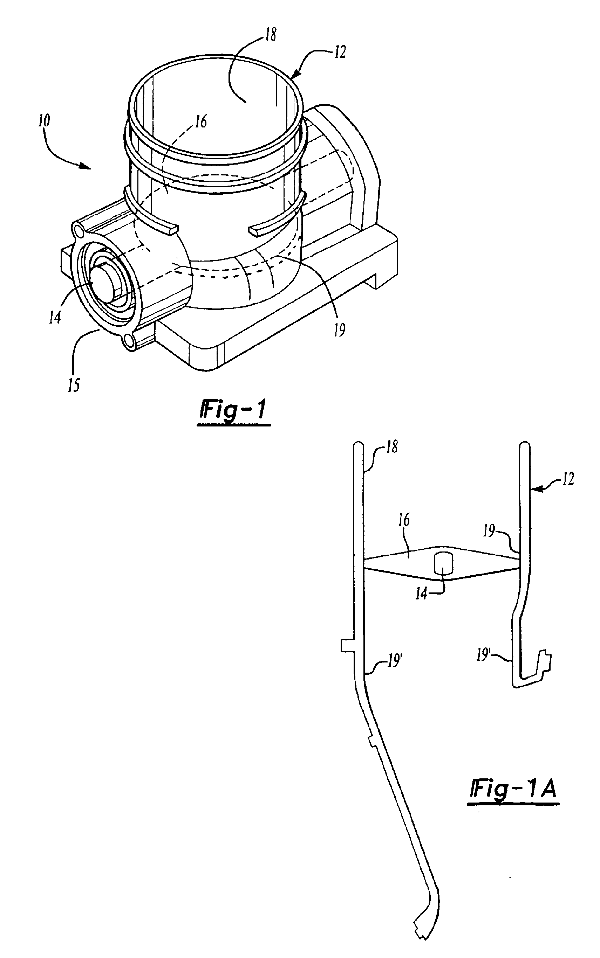

Figure 1 illustrates a partial sectional view of an air flow assembly such as a throttle body system 10 for a vehicle. The system 10 generally includes a housing throttle body 12, a support shaft 14, and disc or blade 16. Preferably each component is molded separately using conventional techniques and the disc 16 is initially molded to be substantially undersized from the size of the bore 18 within the throttle body 12. Notably, the bore 18 includes an enlarged inner periphery area 19 for the disc 16 mounting location and a relatively more narrow inner periphery area 19' leading to the enlarger inner periphery area 19. As the bore 18 is defined by the enlarged inner periphery area 19 adjacent the disc 16 and the relatively more narrow inner periphery area 19' leading to the enlarger inner periphery area 19, the bore 18 provides a substantially curved or non-linear bore 18 when viewed in cross-section (Figure 1A).

The shaft 14 is assembled to the throttle body housing 12 such that the shaft 14 passes through a bearing 15 located within each boss 20. The disc is preferably fixedly attached at this time by heat staking shaft bosses or the like. The disc 16 is typically oriented within bore 18 at an angle of approximately 3 to 8 degrees from perpendicular with respect to a central axis 21 defined by the bore 18. Preferably, the disc 16 is finally sized by being thermoformed while in this position, causing the disc material to be forced outwardly or extruded into contact with the curved bore wall to be precisely sized and centered within the bore 18.

The disc 16 is preheated to between 100 and 300 degrees Fahrenheit prior to the final sizing operation. Preferably, the disc material is of a lower melting point material than that of the throttle body housing 12. For example only, Nylon 6 could be used for the disc, Nylon 66 for the body 12.

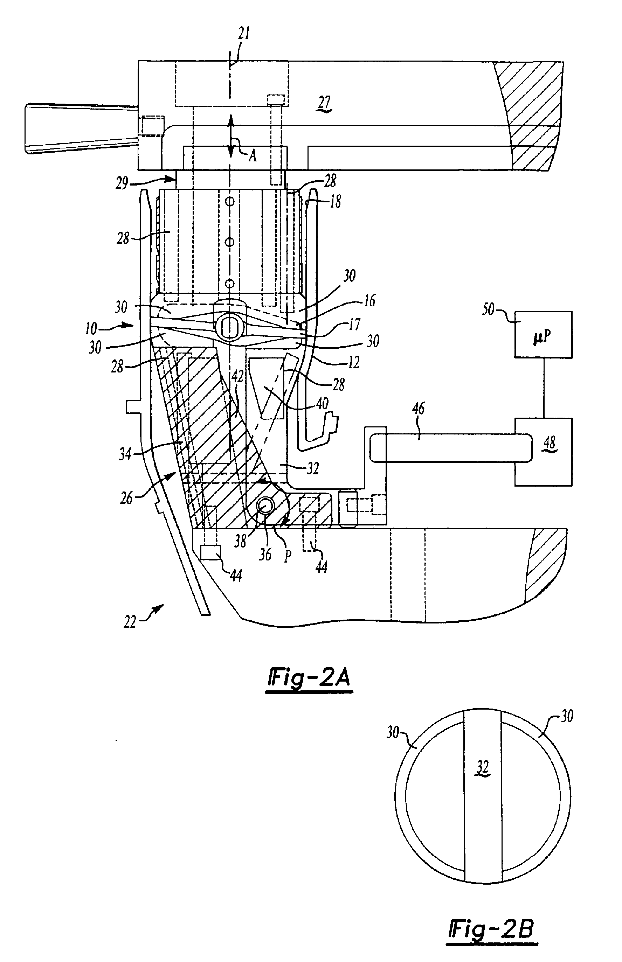

Referring to Figure 2A, a forming assembly 22 receives the system 10 once the shaft 14 and disc 16 are assembled to the throttle body housing 12. The assembly 22 includes a first support 24 insertable into the bore 18 from above the disc 16, and a second support 26 inserted from below the disc 16. It should be understood that the terms "above" and 'below" are used in reference to the illustrations and are not to be construed as a limitation on component orientation. Furthermore, the components thermoforming operation and the relative orientation or angle of the supports 24,26 is preferably set to provide the disc with an idle position having a perimeter chamfer optimized for the slight 3 to 8 degree angle, however other orientations will benefit from the present invention.

Each support 24,26 includes an integral heater 28 for heating and forming the outer periphery of disc 16. The supports 24, 26 may, for example, be heated by an electrical heater coil disposed therein or by other heating arrangements such as by the flow of heated fluid. Other ways of heating the disc 16 may be further employed, such as by using a laser source or by ultrasonic energy to cause appropriate softening sufficient to carry out the extruding process.

The supports 24,26 include relatively narrow semi-circular or semi-elliptical forming segments 30 (also illustrated in Figure 2B) which substantially correspond to the outer periphery 17 of disc 16. The segments 30 preferably form an outer perimeter of the supports 24,26. Preferably, the segments 30 of the first support 24 extend about the periphery of a relieved area 32 which form a recessed area. The relieved area 32 forms a clearance between the shaft 14 and the supports 24, 26 when the supports 24, 26 are closed onto the disc 16. The segments 30, concentrate the extruding pressure in a narrow annular area adjacent the outer periphery 17 of the disc 16.

The first support 24 is movable into contact with the disc 16 by an associated driving element (illustrated schematically at 27). The driving element 27 moves the first support 24 in the direction of double headed arrow A such that the system 10 can be located within and removed from the throttle body 12 by appropriately moving the driving element 27.

The second support 26 preferably includes a first portion 32 movable relative to a second portion 34. The first portion 32 engages the second portion 34 at a pivot 36 defined by a pivot pin 38 or the like. A pivot arm 40 extends from the first portion 32 and fits within a slot 42 defined by the second portion 34. Preferably, the pin 38 passes through the slot 42 and through the pivot arm 40 to thereby movably capture the first portion 32 to the second portion 34.

The second portion 34 is fixedly attached to the forming assembly 22 by fasteners 44 or the like. The first portion 32 further includes an extension 46 which engages an actuator (illustrated schematically at 48) to pivot the first portion 32 relative to the second portion 34 about pivot 36 as defined by double headed arrow P. Preferably, articulation of the first portions 32 is provided in response to a controller (illustrated schematically at 50).

A method for producing the system 10 will now be described. However, it should be realized that the use of a throttle valve system is for illustrative purposes only, and that the methodology of the present invention may be applied to other vehicle air directing components having a disc within a curved bore. Preferably, each below described step is operated and monitored by the controller 50 to assure accurate and repeatable operation.

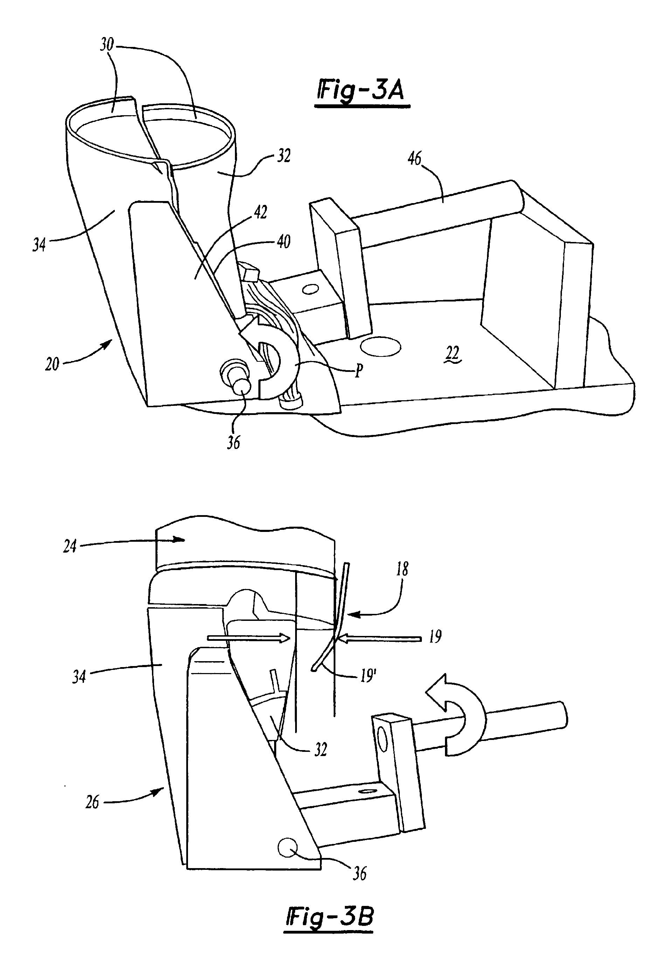

Referring to Figure 3A, the first portion 32 is articulated relative to the second portion 34 about pivot 36 such that the pivot arm 40 of the first portion 32 fits within the slot 42 defined by the second portion 34. The second support 26 is now positioned in a closed or collapsed position. Referring to Figure 3B, the second support 26 now fits through the relatively more narrow portion 19' of bore 18 (both illustrated schematically). As described, above, the disc 16 may have been previously preheated in a known manner.

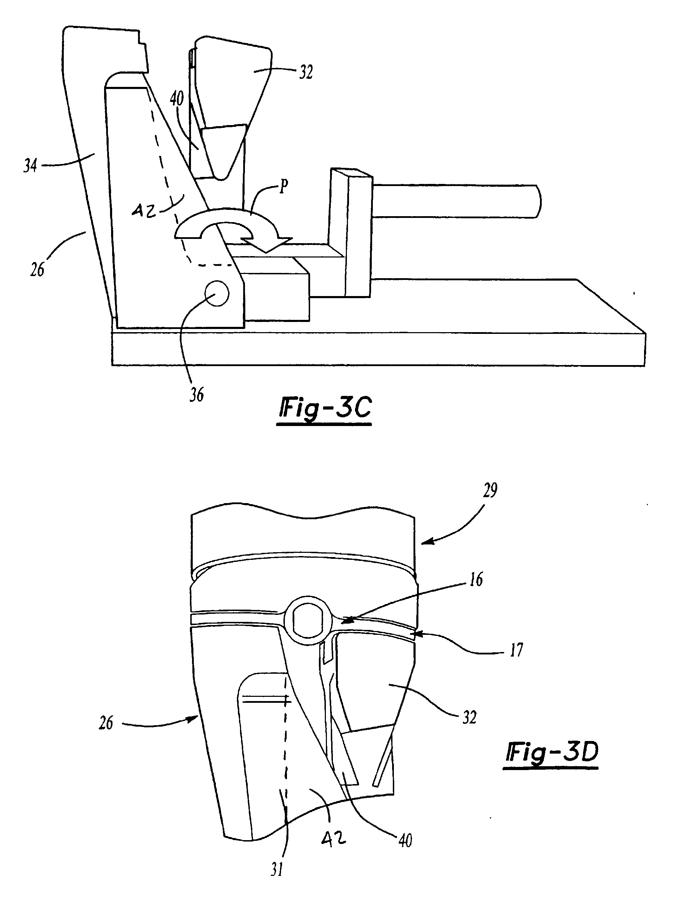

Referring to Figure 3C, once the second support 26 is passed through the narrow portion 19' the first portion 32 is pivoted away from the second portion 34 about pivot 36 such that the second support 26 is positioned in an open or expanded position. The forming segments 30 extending from the first and second portion 32,34 are thereby correctly positioned to engage the disc 16 adjacent the disc 16 outer periphery 17 (Figure 3D). The segments 30 may also be in an at least partially heated condition by the integral heaters 28. Moreover, as the first portion 32 has pivoted away from the second portion 34, clearance between the portions 32,34 is formed to receive the shaft 14 of the disc 16.

Referring to Figure 3D, the first support 24 is lowered toward the disc 16 such that the first support 24 contacts the disc 16. Once the supports 24,26 contact the disc 16, the forming segments 30 form the outer periphery of the disc 16. As the disc 16 is squeezed between the supports 24,26, heat conducted from the heaters 28 and through the segments 30 cause the material of the disc 16 to be extruded radially outwardly into contact with the enlarged inner periphery portion 19 of the bore 18. (Figure 2)

When the thermoforming operation is complete, the first support 24 is removed from the bore 18. The second support 26 is articulated back into the closed position and may then be removed from the bore 18 through the relatively more narrow portion 19. It should be understood that although only one support is illustratated as being articutable, both supports can benefit from the present invention particularly when used with a spherical bore.

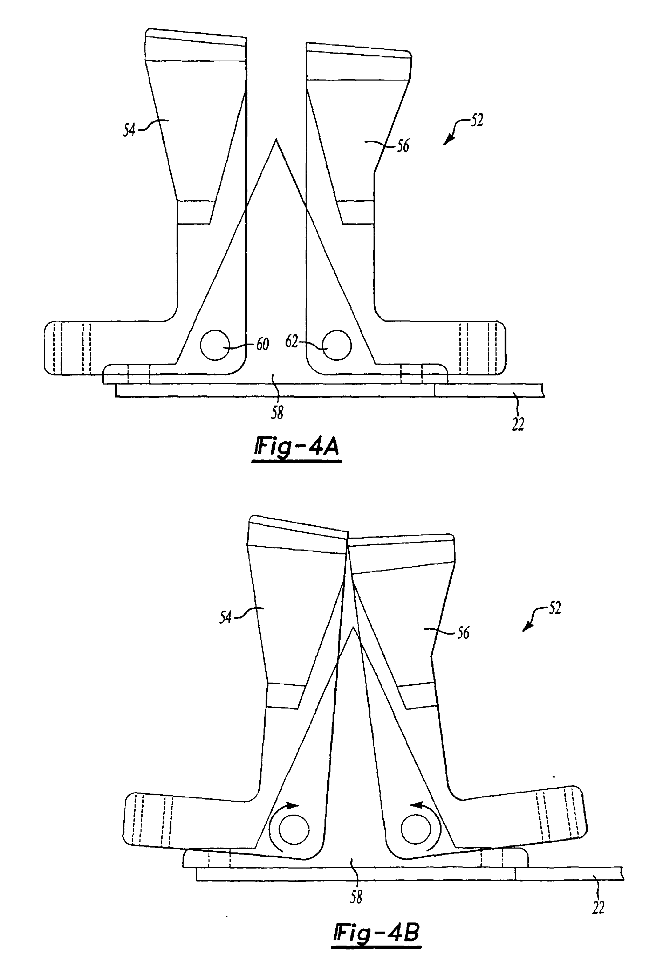

Referring to Figure 4A, another embodiment according to the present invention is illustrated. A multiple articulated support assembly 52 is illustrated. The assembly 52 preferably includes an articulatable first portion 54, an articulatable second portion 56 and a base 58. Each portion 54,56 includes an integral heater 55 as described above. The first and second portions 54,56 are preferably pivotally attached to the base 58 at respective pivots 60, 62 defined by a pivot pin or the like. The base 58 extends from a forming assembly (shown schematically at 22'; also illustrated in Figure 1) such that each portion 54,56 is articualtable relative to the base 58.

Referring to Figure 4B, the multiple articulated support assembly 52 is illustrated in a closed or collapsed position. In this embodiment the articulatable first portion 54 and the articulatable second portion 56 are both pivotable toward each other about pivots 60,62. As described above, an actuator (not shown) provides articulation of each portion in response to a controller (not shown).

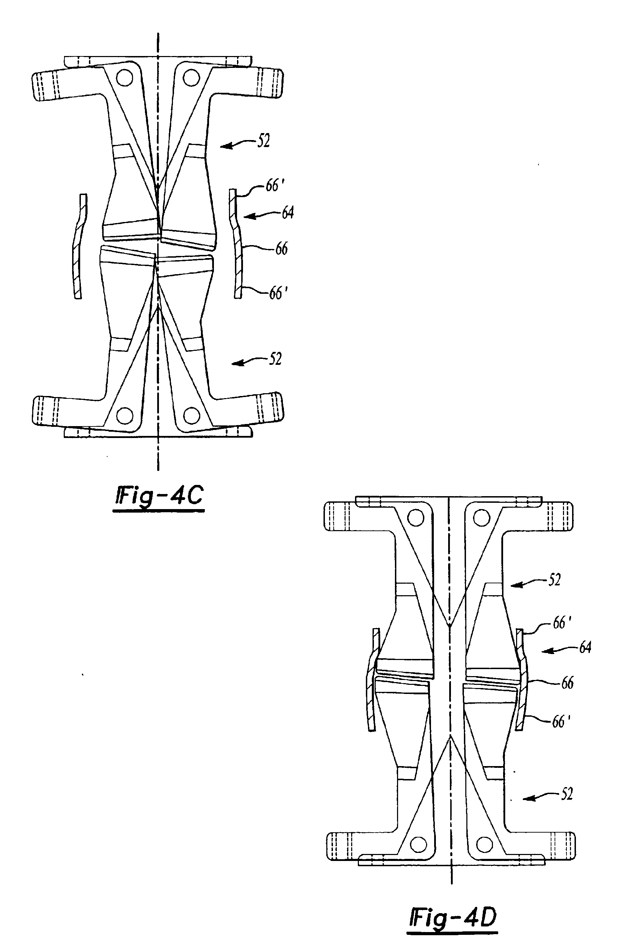

Referring to Figure 4C, a pair of multiple articulated support assemblies 52 are illustrated inserted into a throttle body 64 having a substantially spherical bore portion 66. A relatively narrower bore portion 66' is located at each end of the substantially spherical bore portion 66. The pair of multiple articulated support assemblies 52 are thus required to pass through the relatively narrower bore portion 66'and then be articulated to an open position (Figure 4D) within the substantially spherical bore portion 66.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A forming assembly for a vehicle air flow assembly having a valve disc within a curved bore, said forming assembly comprising:
a first support having a first forming segment and a heater, said first support engageable with a first side of the disc;
a second support having a second forming segment and a heater, said second support engageable with a second side of the disc, said second support having a first portion movable relative to a second portion.

2. The assembly as recited in claim 1, further comprising a pivot between said first portion and said second portion, said first portion pivotable relative to said second portion.

3. The assembly as recited in claim 1, wherein said first and second forming segments are substantially annular.

4. The assembly as recited in claim 1, further comprising a support structure extending from said second support, said fluid receiving member located substantially within said support structure.

5. The assembly as recited in claim 1, wherein said second portion is fixed to a support structure.

6. The assembly as recited in claim 1, wherein said first support includes a recess.

7. The assembly as recited in claim 1, wherein said first portion and said second portion form an opening when said second support is positioned in an open position.

8. The assembly as recited in claim 7, wherein said first portion and said second portion align said second forming segment adjacent an outer periphery of the valve plate when said second support is positioned in said open position.

9. The assembly as recited in claim 1, wherein said first portion and said second portion are each movably attached to a base.

10. A forming assembly for a vehicle throttle body having a valve disc within a curved bore, said forming assembly comprising:
a first support having a first forming segment and a heater, said first forming segment engageable with a first side of the disc;
a second support having a heater, said second support including a first portion having a second forming segment and a second portion having a third forming segment, said first portion movable relative to said second portion such that said second support is positionable in an open position and a closed position, said second and third forming segments engageable with a second side of the disc when said second support is position in said open position.

11. The assembly as recited in claim 10, wherein said first portion and said second portion are each movable relative to a base.

12. The assembly as recited in claim 10, wherein said first portion fits at least partially within said second portion.

13. The assembly as recited in claim 12, wherein said first portion is pivotable about a pivot relative to said second portion.

14. The assembly as recited in claim 12, wherein said first portion includes a pivot arm and said second portion includes a slot, said pivot arm pivotable at least partially within said slot when said second support is positioned in said closed position.

15. A method of manufacturing a valve disc within a curved bore of a vehicle air flow assembly comprising the steps of:
(1) locating a first support having a first forming surface within the bore and adjacent a first surface of the disc;
(2) articulating a second support into a first position to fit through a bore portion relatively more narrow than an outer periphery of the valve disc;
(3) locating the second support having a second forming surface adjacent a second surface of the disc;
(4) articulating the second support into a second position to substantially correspond to the outer periphery of the valve disc; and
(5) engaging the first forming surface and the second forming surface with the valve disc to displace the outer periphery of the disc toward the bore.

16. A method as recited in claim 15, wherein said step 2 includes at least partially fitting a first portion of the second support into a second portion of the second support.

17. A method as recited in claim 15, wherein said step 2 includes pivoting a first portion of the second support toward a second portion of the second support.

18. A method as recited in claim 15, wherein said step 4 includes pivoting a first portion of the second support away from a second portion of the second support.

19. A method as recited in claim 15, wherein said step 5 includes heating said first and said forming surfaces.
